# EUROPÄISCHE PATENTSCHRIFT

(11) **EP 0 868 440 B1**
(45) Veröffentlichungstag und Bekanntmachung des Hinweises auf die Patenterteilung: **12.12.2001**
(21) Anmeldenummer: 96934491.0
(22) Anmeldetag: 30.09.1996
(51) Int. Cl.: C08F 4/63, C08F 210/16

(54) **VERFAHREN ZUR HERSTELLUNG VON ETHYLEN-COPOLYMERISATEN UNTER HOCHDRUCK**
PROCESS FOR PRODUCING ETHYLENE COPOLYMERS UNDER HIGH PRESSURE
PROCEDE DE FABRICATION DE COPOLYMERES D'ETHYLENE SOUS HAUTE PRESSION

(30) Priorität: 14.10.1995 DE 19538294
(43) Veröffentlichungstag der Anmeldung: 07.10.1998
(73) Patentinhaber: Basell Polyolefine GmbH, 77694 Kehl (DE)
(72) Erfinder: MOLL, Ulrich, D-67487 St Martin (DE); SCHAUSS, Eckard, D-67259 Heuchelheim (DE); KLIMESCH, Roger, D-64665 Alsbach-Hähnlein (DE)
(86) Internationale Anmeldenummer: EP9604253
(87) Internationale Veröffentlichungsnummer: WO9714724

(56) Entgegenhaltungen:
- EP-A- 0 260 999
- EP-A- 0 643 066
- WO-A-92/00333
- WO-A-93/11171
- WO-A-93/25590

## Beschreibung

Die vorliegende Erfindung betrifft Verfahren zur Herstellung von Copolymerisaten des Ethylens mit C₃- bis C₁₀-Alk-1-enen.

Weiterhin betrifft die vorliegende Erfindung die Verwendung der hierbei erhältlichen Copolymerisate zur Herstellung von Fasern, Folien und Formkörpern sowie die hieraus erhältlichen Fasern, Folien und Formkörper.

Die WO 91/04257 beschreibt Verfahren zur Herstellung von Olefinpolymerisaten mit Monocyclopentadienylübergangsmetallkomplexen als Katalysatoren, die mit Methylalumoxan aktiviert werden. Um eine ausreichend hohe Produktivität zu erhalten, ist ein sehr hoher Überschuß an Methylalumoxan notwendig, wodurch es zu unerwünscht hohen Aluminiumrückständen im Polymerisat und unrentablen Katalysatorkosten kommt. Um wirtschaftlich interessante Umsätze erzielen zu können, muß die Reaktortemperatur bei Hochdruckprozessen verfahrensbedingt auf größer als 200°C gehalten werden, da mit steigender Temperatur die Polymerisationsrate und somit auch die Produktionsrate zunimmt. Die in der WO 91/04257 genannten, mit Methylalumoxan aktivierten, Katalysatorsysteme zeigen schon bei Temperaturen größer als 180°C einen drastischen Produktivitätseinbruch und gleichzeitig einen Rückgang des Molekulargewichts der erhaltenen Polymere.

In der WO 93/25590 ist ein Verfahren zur Herstellung von Polyolefinen unter Hochdruck- und Hochtemperaturbedingungen beschrieben, bei dem als Katalysatoren Monocyclopentadienylübergangsmetallkomplexe, die mit ionischen Verbindungen aktiviert werden, eingesetzt werden. Nachteilig hierbei ist, daß bei den für wirtschaftliche Umsätze notwendigen Polymerisationstemperaturen von oberhalb 200°C die Polyolefine höhere Dichten, niedrigere Molekulargewichte oder eine breite Molekullargewichtsverteilung aufweisen.

Die gleichen Nachteile zeigen die in der EP-A 612 768 und EP-A 612 769 hergestellten Ethylen-Copolymere, die mittels Biscyclopentadienylubergangsmetallkomplexen, ionischen Verbindungen und Organoaluminiumverbindungen als Katalysatorbestandteile im Hochdruckprozeß bei Reaktionstemperaturen oberhalb von 200°C erhalten werden.

Die US-A 5,272,236 beschreibt Ethylen-Copolymere, die mit Monocyclopentadienylübergangsmetallkomplexen und ionischen Verbindungen als Katalysatorbestandteile im Lösungsverfahren hergestellt werden. Auch diese Polymerisate weisen bei Temperaturen oberhalb von 200°C eine höhere Dichte auf.

Der vorliegenden Erfindung lag daher die Aufgabe zugrunde, ein Verfahren zur Herstellung von Copolymerisaten des Ethylens mit C₃-bis C₁₀-Alk-1-enen zur Verfügung zu stellen, das hohe Umsätze bei geringem Katalysatorverbrauch ermöglicht, das verfahrenstechnisch einfach durchführbar ist und wobei die entstehenden Ethylen Copolymerisate niedrige Dichten, hohe Molekulargewichte und eine enge Molekulargewichtsverteilung aufweisen.

Demgemäß wurden Verfahren zur Herstellung von Copolymerisaten des Ethylens mit C₃- bis C₁₀-Alk-1-enen gefunden, wobei man bei Drükken im Bereich von 1000 bis 3500 bar und Temperaturen im Bereich von 200 bis 280°C in Gegenwart eines Katalysatorsystems, das als aktive Bestandteile einen donorsubstituierten Monocyclopentadienylamidoübergangsmetallkomplex der allgemeinen Formel I: 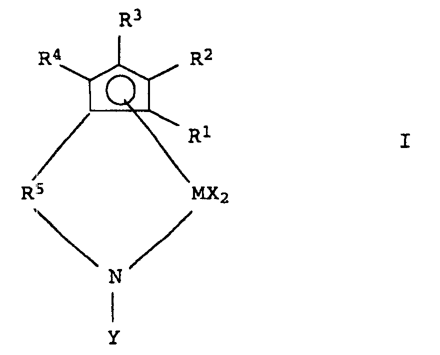 in der die Substituenten die folgende Bedeutung haben:
- M: Titan, Zirkonium oder Hafnium,
- X: Fluor, Chlor, Brom, Jod, Wasserstoff, C₁- bis C₁₀-Alkyl oder C₆ bis C₁₅-Aryl,
- R¹ bis R⁴: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁶)₃ mit
- R⁶: C₁- bis C₁₀-Alkyl, C₃- bis C₁₀-Cycloalkyl oder C₆- bis C₁₅-Aryl,
- R⁵: 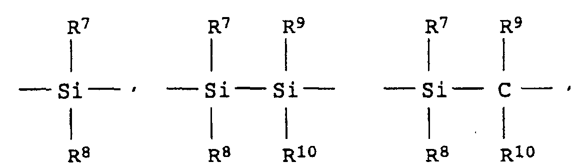 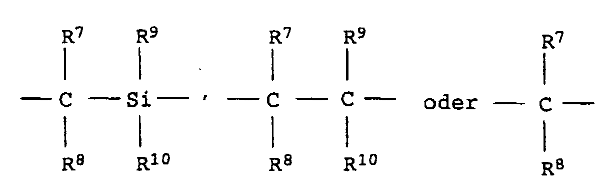 mit
- R⁷ bis R¹⁰: Wasserstoff, C₁- bis C₁₀-Alkyl, C₆- bis C₁₅-Aryl oder R⁷ und R⁹ oder R⁸ und R¹⁰ jeweils mit den sie verbindenden Atomen einen Ring bilden,
- Y: 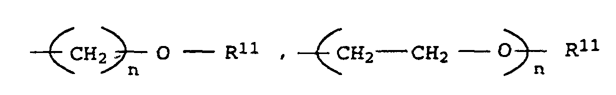 oder 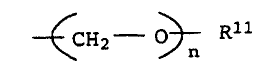 mit
- R¹¹: Wasserstoff, C₁- bis C₆-Alkyl oder C6- bis C₁₅-Aryl, das seinerseits mit C₁- bis C₄-Alkylgruppen substituiert sein kann
und
- n: für 1, 2 oder 3 steht,
eine metalloceniumionenbildende Verbindung und gegebenenfalls eine Aluminiumtrialkylverbindung enthält, polymerisiert.

Weiterhin wurde die Verwendung der hierbei erhältlichen Copolymerisate zur Herstellung von Fasern, Folien und Formköpern gefunden sowie die hieraus erhältlichen Fasern, Folien und Formkörper.

Bei dem erfindungsgemäßen Verfahren werden als Comonomere C₃- bis C₁₀-Alk-1-ene eingesetzt, vorzugsweise Propen, But-1-en, Hex-1-en und Oct-1-en, insbesondere But-1-en und Hex-1-en. Es können auch mehrere Comonomere eingesetzt werden, vorzugsweise werden jedoch nur Ethylen und ein Comonomer eingesetzt. Die Menge an eingesetzten Comonomeren kann im Bereich von 20 bis 80 Gew.-% liegen, vorzugsweise im Bereich von 40 bis 60 Gew.-%. Die Summe der Gewichtsprozente des Ethylens und der eingesetzten Comonomeren ergibt stets 100.

Das erfindungsgemäße Verfahren wird bei Drücken im Bereich von 1000 bis 3500 bar, vorzugsweise 1200 bis 3000 bar ausgeführt und bei Temperaturen im Bereich von 200 bis 280°C, vorzugsweise 220 bis 260°C. Die Reaktionszeiten sind an sich unkritisch, 30 bis 300 Sekunden haben sich als besonders geeignet erwiesen, vorzugsweise 60 bis 180 Sekunden.

Bei dem erfindungsgemäßen Verfahren wird als ein Katalysatorbestandteil ein donorsubstituierter Monocyclopentadienylamidoübergangsmetallkomplex eingesetzt. Es können auch Mischungen mehrerer dieser Komplexe eingesetzt werden, vorzugsweise wird jedoch nur einer verwendet.

Besonders bevorzugt sind Komplexe der allgemeinen Formel I, in der
- M: für Titan steht,
- X: für Chlor oder C₁- bis C₄-Alkyl,
- R¹ bis R⁴: für Wasserstoff, C₁- bis C₆-Alkyl, insbesondere Methyl, Ethyl, Propyl, n-Butyl und tert. -Butyl, Phenyl oder wobei zwei benachbarte Reste gemeinsam für 4 bis 10 C-Atome aufweisende cyclische Gruppen stehen,
- R⁵: 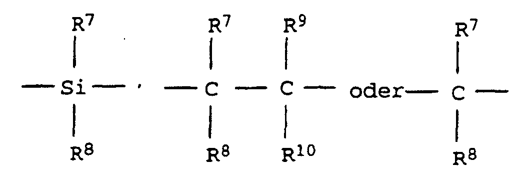 bedeutet,mit
- R⁷ bis R¹⁰: Wasserstoff oder C₁- bis C₆-Alkyl,
- Y: 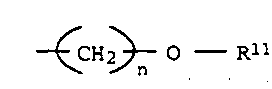 bedeutet, mit
- R¹¹: C₁- bis C₄-Alkyl, insbesondere Methyl
und
- n: für die Zahl 2 steht.

Besonders bevorzugte Verbindungen der allgemeinen Formel I sind
[(Methoxyethylamido)dimethylsilyl(tetramethylcyclopentadienyl)]dichlorotitan,
[(Methoxyethylamido)dimethylsilyl(tetramethylcyclopentadienyl)]dimethyltitan,
[(Methoxyethylamido)dimethylsilyl(3-tert.-butylcyclopentadienyl)]dichlorotitan,
[(Methoxyethylamido)dimethylsilyl(3-tert.-butylcyclopentadienyl)]dimethyltitan,
[(Methoxyethylamido)dimethylsilyl(cyclopentadienyl)]dichlorotitan,
[(Methosyethylamido)dimethylsilyl(cyclopentaidenyl))dimethyltitan.

Die Komplexe der allgemeinen Formel I sowie Verfahren zu ihrer Herstellung sind an sich bekannt und beispielsweise in Organometallics 1995, Vol. 14, No. 7, Seite 3129 bis 3131 beschrieben.

Bei der Herstellung der bevorzugten (Methoxyethylamido)dimethylsilyl-Verbindungen der Formel I kann man beispielsweise so vorgehen, daß man durch Umsetzung des entsprechend substituierten (Chlordimethylsilyl)cyclopentadiens mit Lithium(methoxyethylamid) das entsprechend substituierte [(Methoxyethylamino)dimethylsilyl]cyclopentadien herstellt und dieses dann mit n-Butyllithium, TiCl₃(THF)₃ und PbCl₂ reagieren läßt. Zur Herstellung der entsprechenden Dimethyltitanverbindung gibt man vorzugsweise zu der entstandenen Dichlortitanverbindung Methylmangesiumchlorid.

Als metalloceniumionenbildende Verbindung wird bei dem erfindungsgemäßen Verfahren vorzugsweise eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen eingesetzt.

Als starke, neutrale Lewissäuren sind Verbindungen der allgemeinen Formel II

M¹X¹X²X³ II

bevorzugt, in der
- M¹: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel III

[(A^{a+})Q₁Q₂...Q_{z}]^{d+} III

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁-bis C₁₀-Cycloalkyl, welches gegebenenfalls mit C₁-bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Als metalloceniumionenbildende Verbindung wird insbesondere N,N-Dimethylaniliniumtetrakis(pentafluorphenyl)borat eingesetzt.

Gegebenenfalls kann bei dem erfindungsgemäßen Verfahren noch eine Aluminiumtrialkylverbindung eingesetzt werden. Bevorzugt wird eine Aluminiumtrialkylverbindung dann verwendet, wenn der donor-substituierte Monocyclopentadienylamidoübergangsmetallkomplex als Übergangsmetallhalogenkomplex vorliegt, d.h. wenn X in der allgemeinen Formel I für Halogen steht.

Als Aluminiumtrialkylverbindungen können solche der allgemeinen Formel VI

AlR¹²R¹³R¹⁴ IV

in der
- R¹² bis R¹⁴: C₁- bis C₁₂-Alkyl bedeuten,
eingesetzt werden.

Vorzugsweise sind die Reste R¹² bis R¹⁴ gleich und stehen für C₁-bis C₆-Alkyl, insbesondere für Methyl, Ethyl, Isobutyl oder Hexyl.

Es hat sich als besonders geeignet erwiesen, wenn das molare Verhältnis von Bor aus der metalloceniumionenbildenden Verbindung zu Übergangsmetall aus dem donorsubstituierten Monocyclopentadienylamidoübergangsmetallkomplex im Bereich von 0,1:1 bis 10:1 liegt, insbesondere im Bereich von 1:1 bis 5:1.

Wenn eine Aluminiumtrialkylverbindung eingesetzt wird, dann liegt das molare Verhältnis von Aluminium aus der Aluminiumtrialkylverbindung zu Übergangsmetall aus dem donorsubstituierten Monocyclopentadienylamidoübergangsmetallkomplex bevorzugt im Bereich von 10000:1 bis 1:1, insbesondere im Bereich von 600:1 bis 200:1.

Das erfindungsgemäße Verfahren kann in den üblichen für die Hochdruckpolymerisation verwendeten Reaktoren durchgeführt werden, beispielsweise in Autoklaven oder insbesondere in Hochdruckrohrreaktoren.

Das erfindungsgemäße Verfahren kann so durchgeführt werden, daß die aktiven Bestandteile des Katalysatorsystems gemischt werden und das Katalysatorsystem dann, vorzugsweise kontinuierlich, in den Reaktor dosiert wird, wobei die Monomeren unter Druck, ebenfalls bevorzugt kontinuierlich, in den Reaktor geleitet wurden.

Das Mischen der Katalysatorbestandteile erfolgt vorzugsweise so, daß die metalloceniumionenbildende Verbindung zu einer Lösung des donorsubstituierten Monocyclopentadienylamidoübergangsmetallkomplexes gegeben wird. Als Lösungsmittel sind Kohlenwasserstoffe, vorzugsweise aromatische Kohlenwasserstoffe, beispielsweise Toluol, geeignet.

Wird als Katalysatorbestandteil auch Aluminiumtrialkyl verwendet, so hat es sich als besonders geeignet erwiesen, wenn eine Lösung des Aluminiumtrialkyls, vorzugsweise werden als Lösungsmittel hier aliphatische Kohlenwasserstoffe, beispielsweise Heptan, verwendet, zu einer toluolischen Lösung des donorsubstituierten Monocyclopentadienylamidoübergangsmetallkomplexes gegeben wird. Anschließend kann dann die metalloceniumionenbildende Verbindung dazugegeben werden.

Das erfindungsgemäße Verfahren zeichnet sich durch hohe Umsätze bei geringem Katalysatorverbrauch aus, es ist verfahrenstechnisch einfach durchführbar und die entstehenden Ethylen-Copolymerisate weisen niedrige Dichten, hohe Molekulargewichte und enge Molekulargewichtsverteilungen M_{w}/Mₙ (M_{w} = Gewichtsmittelwert, Mₙ = Zahlenmittelwert) auf. Weiterhin zeichnen sich die entstehenden Ethylen-Copolymerisate durch hohen Comonomergehalt im Polymeren und durch gute Fließfähigkeit aus.

### Beispiele

- Beispiele 1 bis 6:: Herstellung der donorsubstituierten Monocyclopentadienylamidoübergangsmetallkomplexe
- Beispiel 1:: Herstellung von [(Methoxyethylamido)dimethylsilyl(tetramethylcyclopentadienyl)]dichlortitan (I1)

Die Synthese erfolgte wie in Organometallics, Vol. 14, No. 7, 1995, Seite 3129 bis 3131 beschrieben.

Zu einer Lösung von 5,30 g (24,70 mmol) (Chlordimethylsilyl)tetramethylcyclopentadien in 40 ml trockenem Pentan wurden bei 0°C portionsweise 2,00 g (24,67 mmol) Lithium(methoxyethylamid) hinzugegeben und 16 h bei Raumtemperatur gerührt. Die hellgelbe Reaktionslösung wurde von dem ausgefallenen Lithiumchlorid abfiltriert und das Pentan unter Ölpumpenvakuum entfernt. Die anschließende Destillation des zurückbleibenden Öls lieferte [(Methoxyethylamino)dimethylsilyl]tetramethylcyclopentadien in Form eines hydrolyseempfindlichen, grünlich-gelben Öls. Ausbeute 5,26 g (76 %), Siedepunkt 70-77°C/10⁻² Torr.

4 ml (10 mmol) 2,5 M Butyllithium in Hexan wurden bei 0°C zu 1,40 g (5 mmol) [(Methoxyethylamino)dimethylsilyl]tetramethylcyclopentadien in 30 ml Pentan gegeben. Nach 24 Stunden filtrierte man die überstehende Lösung von dem ausgefallenen Dilithiumsalz ab.

Nach Auflösen in 40 ml THF und Kühlen der Lösung auf -78°C gab man in einer Portion 1,85 g (5 mmol) TiCl₃(THF)₃ hinzu. Nach 2 h rühren bei -10°C und vollständigem Lösen des TiCl₃(THF)₃ hatte die Reaktionsmischung eine dunkelgrünblaue Farbe. Man gab 1,50 g (5,4 mmol) getrocknetes PbCl₂ dazu und ließ weitere 12 h bei Raumtemperatur rühren, wobei die Farbe nach orangebraun wechselte. Das THF wurde unter Vakuum eingedampft und der feste braune Rückstand mit 50 ml Pentan extrahiert. Nach Einengen und Filtrieren des Extrakts erhielt man 1,72 g (92 %) orangebraunes, pulvriges Rohprodukt. Die Umkristallisation aus 30 ml Ether bei -30°C ergab 700 mg [(Methoxyethylamido)dimethylsilyl(tetramethylcyclopentadienyl)]dichlorotitan in Form von honiggelben Kristallen mit einem Schmelzpunkt von 98°C.

¹H-NMR (C₆D₆, 25°C): δ 4.34 (t, 2H), 3.08 (t, 2H), 2.90 (s, 3H), 2.02 (s, 6H), 2.00 (s, 6H), 0.46 (s, 6H) ppm, ¹³C-NMR (C₆D₆, 35°C): δ 140.95, 135.75, 104.62, 72.46, 57.85, 54.86, 16.16, 12.89, 2.94 ppm

| | | | | |
|---|---|---|---|---|
| C₁₄H₂₅Cl₂NOSiTi | ber. | C 45,42 | H 06,81 | N 03,78 |
| 370,23 | gef. | C 45,10 | H 06,71 | N 03,77 |

- Beispiel 2:: Herstellung von [(Methoxyethylamido)dimethylsilyl(tert.-butylcyclopentadienyl)]dichlortitan (I2)

Es wurde wie in Beispiel 1 gearbeitet, jedoch wurde statt (Chlordimethylsilyl)tetramethylcyclopentadien (Chlordimethylsilyl)tert.-butylcyclopentadien eingesetzt.
- Beispiel 3:: Herstellung von [(Methoxyethylamido)dimethylsilyl(cyclopentadienyl)]dichlortitan (I3)

Es wurde wie in Beispiel 1 gearbeitet, jedoch wurde statt (Chlordimethylsilyl)tetramethylcyclopentadien (Chlordimethylsilyl)cyclopentadien eingesetzt.
- Beispiel 4:: Herstellung von [(Methoxyethylamido)dimethylsilyl(tetramethylcyclopentadienyl)]dimethyltitan (I4)

Bei -78°C wurden 0,67 ml (2 mmol) einer 3,0 M Lösung von Methylmagnesiumchlorid in THF zu 370 mg (1 mmol) [(Methoxyethylamido)dimethylsilyl(tetramethylcyclopentadienyl)]dichlorotitan (I1) (hergestellt in Beispiel 1) gegeben. Man ließ den Reaktionsansatz langsam auf Raumtemperatur auftauen und 3 h weiter rühren. Die ursprünglich orange Farbe wechselte dabei zu hellgelb. Das THF wurde unter Vakuum abgezogen und der zurückbleibende gelbe Feststoff mit 20 ml Pentan extrahiert. Die Pentanlösung wurde filtriert und das Lösungsmittel entfernt. Man erhielt I4 quantitativ als gelbes Öl.

¹H-NMR (C₆D₆, 25°C): δ 4.30 (t. 2H), 3.38 (t, 2H), 3.12 (s, 3H), 2.00 (s, 6H), 2.00 (s, 6H), 1.88 (s, 6H), 0.40 (s, 6H), 0.39 (s, 6H) ppm, ¹³C-NMR (C₆D₆, 25°C): δ 134.11, 129.34, 97.38, 75.27, 58.17, 50.53, 49.68, 15.13, 11.34, 3.35 ppm
- Beispiel 5:: Herstellung von [(Methoxyethylamido)dimethylsilyl(tert.-butylcyclopentadienyl)]dimethyltitan (15)

Es wurde wie in Beispiel 4 gearbeitet, jedoch wurde statt (I1) (I2) eingesetzt.
- Beispiel 6:: Herstellung von [(Methoxyethylamido)dimethylsilyl(cyclopentadienyl)]dimethyltitan (16)

Es wurde wie in Beispiel 4 gearbeitet, jedoch wurde statt (I1) (I3) eingesetzt.
- Beispiele 7 bis 14:: Herstellung von Ethylen/But-1-en Copolymerisaten
- Beispiele 7 bis 9:: Herstellung von Ethylen/But-1-en Copolymerisaten im Autoklaven unter Verwendung von (I1) bis (I3)

40 Gew.-% Ethylen und 60 Gew.-% But-1-en wurden unter Druck kontinuierlich in einen 1 l Hochdruckautoklaven mit Rührmotor geleitet, wobei der Druck im Innern des Autoklaven auf 1500 bar geregelt wurde.

In einem separaten Ansatzbehälter wurde jeweils eine Lösung von 200 mmol Triisobutylaluminium in Heptan (30 gew.-%ig) zu einer Lösung von 0,5 mmol (I1) (Beispiel 7), 0,5 mmol (I2) (Beispiel 8) oder 0,5 mmol (I3) (Beispiel 9) in 10 l Toluol im molaren Verhältnis Al:Ti = 400:1 gegeben. Anschließend wurden zur Aktivierung 480 mg festes N,N-Dimethylaniliniumtetrakis (pentafluorphenyl)borat (molares Verhältnis B:Ti = 1,2:1) gegeben. Die resultierende Katalysatorlösung wurde kontinuierlich in den Autoklaven dosiert (1500 ml/h) und die Reaktionstemperatur bei 230°C gehalten.
- Beispiel 10:: Herstellung von Ethylen/But-1-en Copolymerisat im Rohrreaktor unter Verwendung von (I1)

40 Gew.-% Ethylen und 60 Gew.-% But-1-en wurden unter Druck kontinuierlich in einen Hochdruckrohrreaktor (Länge: 620 m, Durchmesser: 15 mm, Durchsatz: 700 kg/h) geleitet, wobei der Druck im Innern des Rohrreaktors auf 1700 bar geregelt wurde. In einem separaten Ansatzbehälter wurde, wie in den Beispielen 7 bis 9 beschrieben, eine Katalysatorlösung (0,3 mmol) mit (I1) hergestellt, kontinuierlich in den Rohrreaktor dosiert (1500 ml/h) und die Reaktionstemperatur bei 235°C gehalten.
- Beispiele 11 bis 13:: Herstellung von Ethylen/But-1-en Copolymerisaten im Autoklaven unter Verwendung von (I4) bis (I6)

Es wurde wie in den Beispielen 7 bis 9 gearbeitet,jedoch wurden als Katalysatorlösungen jeweils 480 mg N,N-Dimethylaniliniumtetrakis(pentafluorphenyl)borat zu einer Lösung von 0,5 mmol (I4) (Beispiel 11), 0,5 mmol (I5) (Beispiel 12) oder 0,5 mmol (I6) (Beispiel 13) in 10 1 Toluol (molares Verhältnis B:Ti = 1,2:1) gegeben.
- Beispiel 14:: Herstellung von Ethylen/But-1-en Copolymerisat im Rohrreaktor unter Verwendung von (I4)

Es wurde wie in Beispiel 10 gearbeitet, wobei eine Katalysatorlösung mit (I4), die wie in den Beispielen 11 bis 13 beschrieben hergestellt wurde, eingesetzt wurde.
- Vergleichsbeispiele V1 bis V4:: Herstellung von Ethylen/But-1-en Copolymerisaten im Autoklaven

Es wurde wie in den Beispielen 7 bis 9 gearbeitet, jedoch wurden statt (I1), (I2) oder (I3) [(N,N-Dimethylethylendiamido)dimethylsilyl(tetramethylcyclopentadienyl)]dichlortitan (Vergleichsbeispiel V1), [(N,N-Dimethylethylendiamido)dimethylsilyl(tert.-butylcyclopentadienyl)]dichlortitan (Vergleichsbeispiel V2), [(N,N-Dimethylethylendiamido)dimethylsilyl(cyclopentadienyl)]dichlortitan (Vergleichsbeispiel V3) und [(Tert.-butylamido)dimethylsilyl(tetramethylcyclopentadienyl)]dichlortitan (Vergleichsbeispiel V4) eingesetzt.
- Vergleichsbeispiele V5 bis V8:: Herstellung von Ethylen/But-1-en Copolymerisaten im Autoklaven

Es wurde wie in den Beispielen 11 bis 13 gearbeitet, jedoch wurden statt (I4), (I5) oder (I6) [(N,N-Dimethylethylendiamido)dimethylsilyl(tetramethylcyclopentadienyl)]dimethyltitan (Vergleichsbeispiel V5), [(N,N-Dimethylethylendiamido)dimethylsilyl(tert.-butylcyclopentadienyl)]dimethyltitan (Vergleichsbeispiel V6), [(N,N-Dimethylethylendiamido)dimethylsilyl(cyclopentadienyl)]dimethyltitan (Vergleichsbeispiel V7) und [(Tert.-butylamido)dimethylsilyl(tetramethylcyclopentadienyl)]dimethyltitan (Vergleichsbeispiel V8) eingesetzt.

Über die Eigenschaften der Copolymerisate gibt die nachfolgende Tabelle Aufschluß.

Der Melt Flow Index MFI wurde nach DIN 53 735 (Auflagegewicht 2,16 kg) bestimmt, der HLMI ebenfalls nach DIN 53 735 (Auflagegewicht 21,6 kg), die Gewichtsmittelwerte M_{w} und Zahlenmittelwerte Mₙ durch GPC-Messungen (Gelpermeationschromatographie), die Dichte nach DIN 53 479.

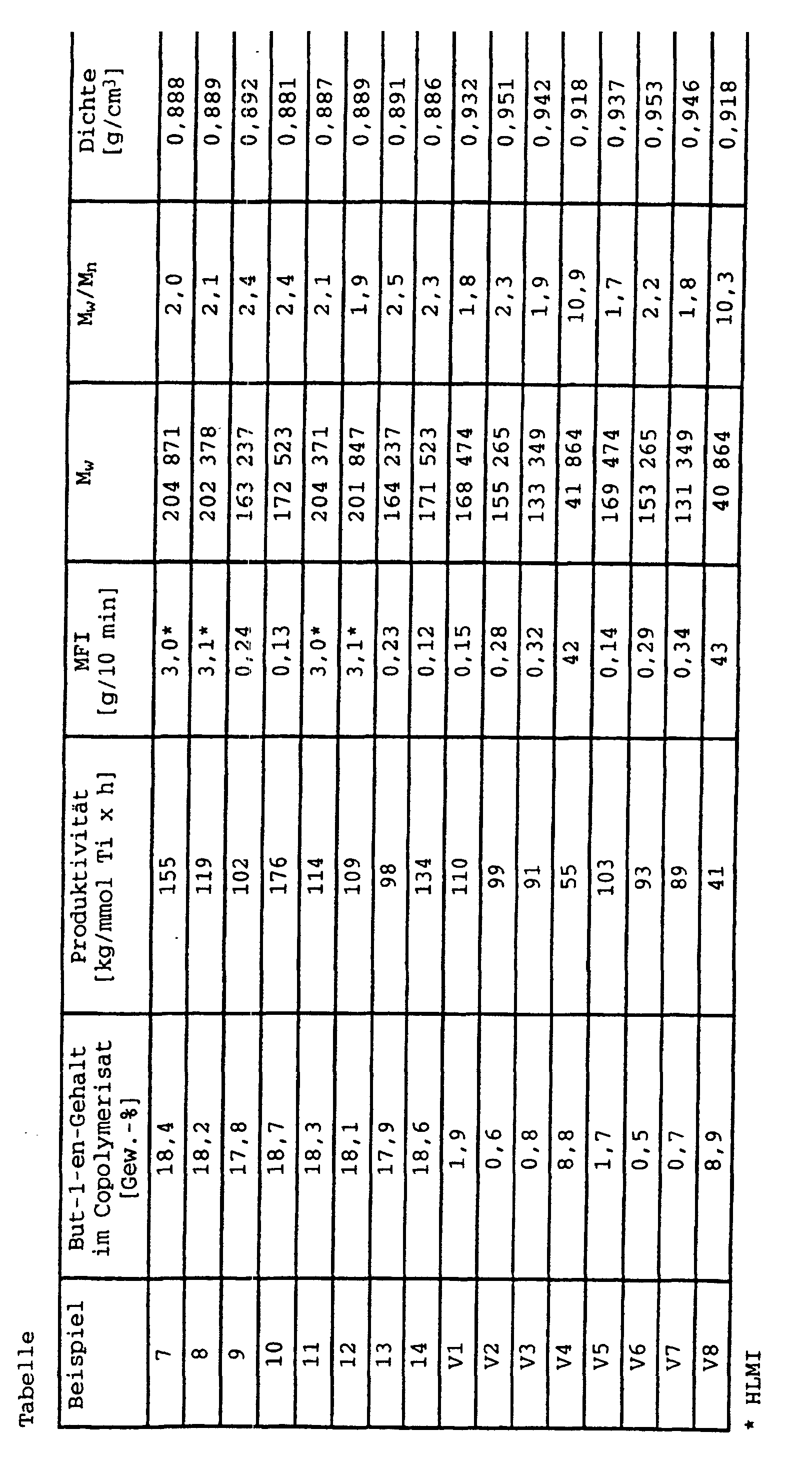

## Patentansprüche

1. Verfahren zur Herstellung von Copolymerisaten des Ethylens mit C₃- bis C₁₀-Alk-1-enen, **dadurch gekennzeichnet, daß** man bei Drücken im Bereich von 1000 bis 3500 bar und Temperaturen im Bereich von 200 bis 280°C in Gegenwart eines Katalysatorsystems, das als aktive Bestandteile einen donorsubstituierten Monocyclopentadienylamidoübergangsmetallkomplex der allgemeinen Formel I 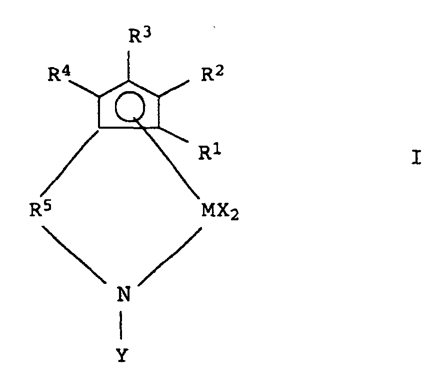 in der die Substituenten die folgende Bedeutung haben:
M Titan, Zirkonium oder Hafnium,
X Fluor, Chlor, Brom, Jod, Wasserstoff, C₁- bis C₁₀-Alkyl oder C₆ bis C₁₅-Aryl,
R¹ bis R⁴ Wasserstoff, C₁- bis C₁₀-Alkyl, 5- bis 7-gliedriges Cycloalkyl, das seinerseits ein C₁-bis C₁₀-Alkyl als Substituent tragen kann, C₆-bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁶)₃ mit
R⁶ C₁- bis C₁₀-Alkyl, C₃- bis C₁₀-Cycloalkyl oder C₆-bis C₁₅-Aryl,
R⁵ 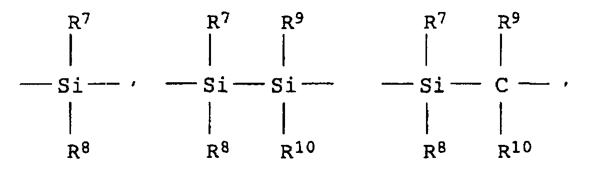 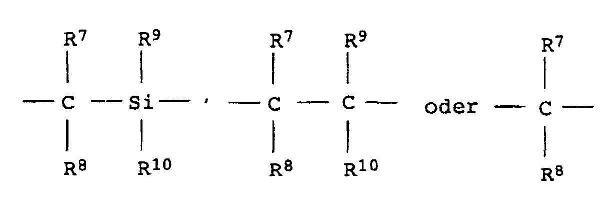 mit
R⁷ bis R¹⁰ Wasserstoff, C₁- bis C₁₀-Alkyl, C₆- bis C₁₅-Aryl oder R⁷ und R⁹ oder R⁸ und R¹⁰ jeweils mit den sie verbindenden Atomen einen Ring bilden,
Y 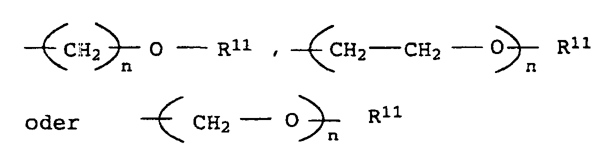 mit
R¹¹ Wasserstoff, C₁- bis C₆-Alkyl oder C₆- bis C₁₅-Aryl, das seinerseits mit C₁- bis C₄-Alkylgruppen substituiert sein kann
und
n für 1, 2 oder 3 steht,
eine metalloceniumionenbildende Verbindung und gegebenenfalls eine Aluminiumtrialkylverbindung enthält, polymerisiert.

2. Verfahren nach Anspruch 1, **dadurch gekennzeichnet, daß** man bei Drücken im Bereich von 1200 bis 3000 bar polymerisiert.

3. Verfahren nach den Ansprüchen 1 bis 2, **dadurch gekennzeichnet, daß** man bei Temperaturen im Bereich von 220 bis 260°C polymerisiert.

4. Verfahren nach den Ansprüchen 1 bis 3, **dadurch gekennzeichnet, daß** man in einem Hochdruckrohrreaktor polymerisiert.

5. Verfahren nach den Ansprüchen 1 bis 4, **dadurch gekennzeichnet, daß** als metalloceniumionenbildende Verbindung eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

6. Verwendung der gemäß den Ansprüchen 1 bis 5 hergestellten Copolymerisate zur Herstellung von Fasern, Folien und Formkörpern.

7. Fasern, Folien und Formkörper, erhältlich aus den gemäß den Ansprüchen 1 bis 5 hergestellten Copolymerisaten als wesentliche Komponente.

## Claims

1. A process for preparing copolymers of ethylene with C₃-C₁₀-alk-1-enes, wherein the polymerization is carried out at pressures in the range from 1000 to 3500 bar and at from 200 to 280°C in the presence of a catalyst system comprising as active constituents a donor-substituted monocyclopentadienylamido(transition metal) complex of the formula I: 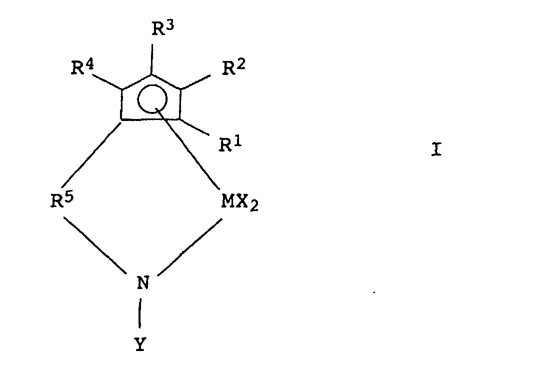 where the substituents have the following meanings:
M is titanium, zirconium or hafnium,
X is fluorine, chlorine, bromine, iodine, hydrogen, C₁-C₁₀-alkyl or C₆-C₁₅-aryl,
R¹ to R⁴ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a cyclic group having from 4 to 15 carbon atoms, or Si(R⁶)₃ where
R⁶ is C₁-C₁₀-alkyl, C₃-C₁₀-cycloalkyl or C₆-C₁₅-aryl,
R⁵ is 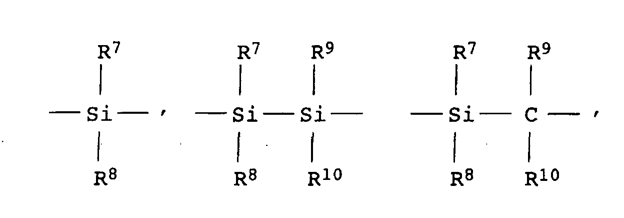 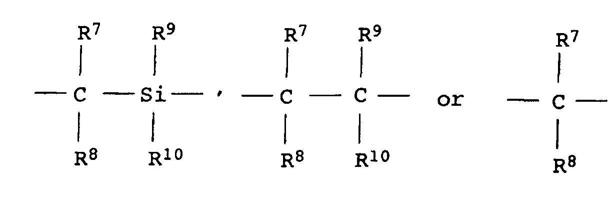 where
R⁷ to R¹⁰ are hydrogen, C₁-C₁₀-alkyl, C₆-C₁₅-aryl or R⁷ and R⁹ or R⁸ and R¹⁰, in each case together with the atoms connecting them, form a ring,
Y is 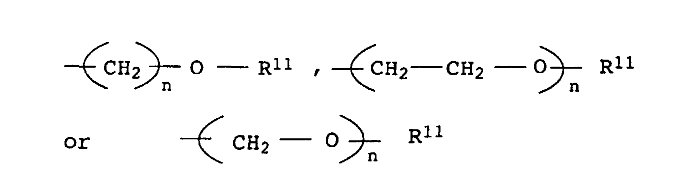 where
R¹¹ is hydrogen, C₁-C₆-alkyl or C₆-C₁₅-aryl which may in turn be substituted by C₁-C₄-alkyl groups
and
n is 1, 2 or 3,
a compound capable of forming metallocenium ions and, if desired, a trialkylaluminum compound.

2. A process as claimed in claim 1, wherein the polymerization is carried out at pressures in the range from 1200 to 3000 bar.

3. A process as claimed in claim 1 or 2, wherein the polymerization is carried out at from 220 to 260°C.

4. A process as claimed in any of claims 1 to 3, wherein the polymerization is carried out in a high-pressure tube reactor.

5. A process as claimed in any of claims 1 to 4, wherein the compound capable of forming metallocenium ions which is used is a coordination compound selected from the group consisting of strong, uncharged Lewis acids, ionic compounds containing Lewis acid cations and ionic compounds containing Brönsted acids as cations.

6. The use of a copoymer prepared as claimed in any of claims 1 to 5 for producing fibers, films and moldings.

7. A fiber, film or molding comprising as significant component a copolymer prepared as claimed in any of claims 1 to 5.

## Revendications

1. Procédé pour la préparation de copolymères de l'éthylène et d'alcènes-1 en C3-C10, **caractérisé par le fait que** l'on polymérise à des pressions dans l'intervalle de 1000 à 3500 bar et des températures dans l'intervalle de 200 à 280°C en présence d'un système catalyseur contenant en tant que constituants actifs, un complexe monocyclopentadiénylamidique de métal de transition, substitué par un donateur, de formule générale I 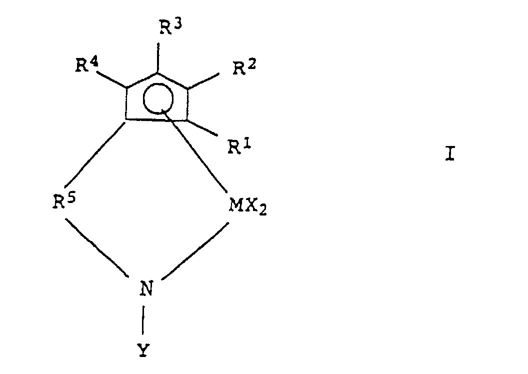 dans laquelle les symboles ont les significations suivantes :
M : le titane, le zirconium ou le hafnium,
X : le fluor, le chlore, le brome, l'iode, l'hydrogène, un groupe alkyle en C1-C10 ou aryle en C6-C15,
R¹ à R⁴ : l'hydrogène, un groupe alkyle en C1-C10, cycloalkyle de 5 à 7 chaînons qui peut lui-même porter un substituant alkyle en C1-C10, aryle en C6-C15 ou arylalkyle, deux radicaux voisins pouvant le cas échéant former ensemble des groupes cycliques contenant 4 à 15 atomes de carbone, ou Si(R⁶)₃ dans lequel
R⁶ représente un groupe alkyle en C1-C10, cycloalkyle en C3-C10 ou aryle en C6-C15,
R⁵ : 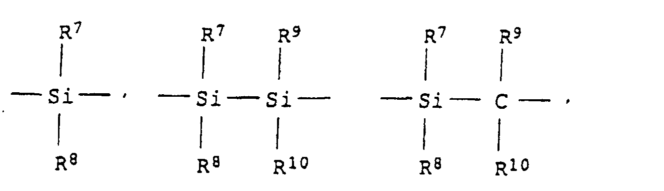 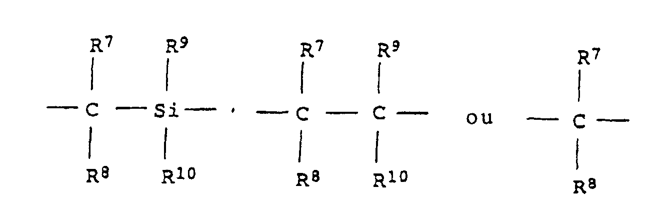
R⁷ à R¹⁰ : l'hydrogène, un groupe alkyle en C1-C10; aryle en C6-C15 ou bien R⁷ et R⁹ d'une part, R⁸ et R¹⁰ d'autre part, forment un cycle avec les atomes qui les relient,
Y: 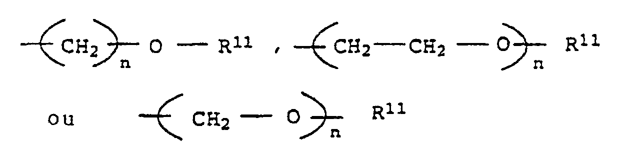
R¹¹ : l'hydrogène, un groupe alkyle en C1-C6 ou aryle en C6-C15 qui peut lui-même porter des substituants alkyle en C1-C4,
et
n est égal à 1, 2 ou 3,
un composé formant des ions métallocénium et le cas échéant un dérivé de trialkylaluminium.

2. Procédé selon la revendication 1, **caractérisé par le fait que** l'on polymérise sous des pressions dans l'intervalle de 1200 à 3000 bar.

3. Procédé selon les revendications 1 à 2, **caractérisé par le fait que** l'on polymérise à des températures dans l'intervalle de 220 à 260°C.

4. Procédé selon les revendications 1 à 3, **caractérisé par le fait que** l'on polymérise dans un réacteur tubulaire résistant aux fortes pressions.

5. Procédé selon les revendications 1 à 4, **caractérisé par le fait que** l'on utilise en tant que composé formant des ions métallocénium un complexe de coordination choisi dans le groupe des acides de Lewis neutres forts, des composés ioniques à cations acides de Lewis et des composés ioniques à cations acides de Brönsted.

6. Utilisation des copolymères préparés selon les revendications 1 à 5 pour la fabrication de fibres, de feuilles et d'objets moulés.

7. Fibres, feuilles et objets moulés obtenus à partir de copolymères préparés selon les revendications 1 à 5 en tant que composants essentiels.
